# EUROPÄISCHE PATENTANMELDUNG

(11) **EP 3 366 099 A1**
(43) Veröffentlichungstag der Anmeldung: **29.08.2018**
(21) Anmeldenummer: 18401018.9
(22) Anmeldetag: 21.02.2018
(51) Int. Cl.: A01C 17/00

(54) **VERFAHREN ZUR AUSBRINGMENGENERFASSUNG EINES SCHLEUDERSTREUERS SOWIE SCHLEUDERSTREUER**

(30) Priorität: 24.02.2017 DE 102017103870
(71) Anmelder: Amazonen-Werke H. Dreyer GmbH & Co. KG, 49205 Hasbergen (DE)
(72) Erfinder: Wermeling, Maik, 48432 Rheine (DE)

(57) **Zusammenfassung**

Beschrieben werden ein Verfahren zur Ausbringmengenerfassung eines Schleuderstreuers und ein entsprechender Schleuderstreuer (1).

Demnach wird ein Gesamtdrehmoment beim Düngeraustrag im Antrieb (5) wenigstens einer Streuscheibe (2) gemessen und mit einem zugehörigen Leerlaufdrehmoment verglichen. Ferner werden temperaturabhängige Verluste im Antrieb (5) der Streuscheibe (2) bei der Ermittlung des Leerlaufdrehmoments berücksichtigt. Dadurch, dass die Verluste in Abhängigkeit von einer Umgebungstemperatur des Schleuderstreuers berücksichtigt werden, ist eine zusätzliche Temperaturmessung im Antrieb (5) der Streuscheiben (2) entbehrlich, so dass das Leerlaufdrehmoment auf präzise und vergleichsweise einfache Weise bei der Ermittlung des durch den Dünger (4) verursachten Lastdrehmoments berücksichtigt werden kann.

## Beschreibung

Die Erfindung betrifft ein Verfahren zur Ausbringmengenerfassung eines Schleuderstreuers gemäß Oberbegriff des Anspruchs 1 sowie einen Schleuderstreuer für Dünger gemäß Oberbegriff des Anspruchs 11.

Aus der EP 2 559 331 B1 ist ein Verfahren zur Erfassung der Ausbringmenge eines Schleuderstreuers mit hydraulisch angetriebenen Streuscheiben bekannt. Hierbei wird ein Gesamtdrehmoment beim Ausbringen des Düngers im Antriebsstrang der Schleuderscheiben gemessen und mit einem Leerlaufdrehmoment der Streuscheiben ohne die durch den Dünger verursachte Last verglichen. Die Ausbringmenge des Düngers lässt sich dann anhand des vom Dünger erzeugten Lastdrehmoments, also der jeweiligen Differenz zwischen Gesamtdrehmoment und Leerlaufdrehmoment ermitteln. Ist das Leerlaufdrehmoment vorab bekannt, kann man die Ausbringmenge während des Düngeraustrags durch Messung des Gesamtdrehmoments kontinuierlich überwachen.

Aufgrund der obigen Differenzbildung sollte das in die Berechnung eingehende Leerlaufdrehmoment die im Antriebsstrang tatsächlich auftretenden Verluste möglichst fehlerfrei wiederspiegeln. Die ist jedoch problematisch, da sich einzelne für das Leerlaufdrehmoment verantwortliche Widerstände im Antriebsstrang, wie beispielsweise die Viskosität des Hydrauliköls, Reibungswiderstände in Kugellagern und/oder Eigenspannungsveränderungen, beträchtlich mit der jeweiligen Betriebstemperatur des Antriebsstrangs ändern.

Bei der EP 2 559 331 B1 sollen diese Fehlerquellen eliminiert werden, indem man bei jeder Leerlaufmessung die Temperatur oder Temperaturen der Antriebsstränge misst und dem Leerlaufdrehmoment zuordnet und abspeichert. Entsprechend können die für die Berechnung verwendeten Leerlaufdrehmomente an die bei der Ausbringmengenbestimmung im Antriebsstrang herrschenden Temperaturen angepasst werden.

Jedoch sind dann jeweils vorab Messungen im Leerlaufbetrieb nötig. Zudem müssen Temperatursensoren im Bereich des Antriebsstrangs angebracht werden, wodurch ein unerwünschter technischer Aufwand entsteht.

Es besteht daher der Bedarf für eine Ausbringmengenerfassung, die die Betriebstemperatur des Antriebsstrangs ausreichend genau und mit geringerem Aufwand berücksichtigt.

Die gestellte Aufgabe wird mit einem Verfahren gemäß Anspruch 1 gelöst. Demnach dient dieses zur Ausbringmengenerfassung eines Schleuderstreuers, wobei ein Gesamtdrehmoment beim Düngeraustrag im Antrieb wenigstens einer Streuscheibe gemessen und mit einem Leerlaufdrehmoment des Antriebs unter Berücksichtigung einer Temperaturabhängigkeit des Leerlaufdrehmoments verglichen wird. Erfindungsgemäß wird für den Schleuderstreuer eine Umgebungstemperatur ermittelt, die dann als Eingangsparameter in eine Berechnung des Leerlaufdrehmoments einfließt.

Dadurch können temperaturabhängige Verluste im Antrieb (Antriebsstrang) der Streuscheibe insbesondere während einer Warmlaufphase des Antriebs ohne zusätzliche Temperaturmessung im Bereich des Antriebsstrangs abgeschätzt und bei der Berechnung des Leerlaufdrehmoments berücksichtigt werden.

Das verlustbedingte Leerlaufdrehmoment ändert sich in erster Linie unmittelbar nach Antriebsstart bis zum Erreichen von Betriebstemperaturen von etwa 20 bis 30°C im Antriebsstrang. Unter dem Antriebsstart ist eine Inbetriebnahme zu verstehen, bei der der Antrieb im Wesentlichen auf Umgebungstemperatur ist. Die Umgebungstemperatur kann daher als eine Starttemperatur einer Warmlaufphase des Antriebs verstanden werden.

Das Warmlaufverhalten des Antriebs basiert auf systematischen Reibungsverlusten, die beispielsweise von der Drehzahl und/oder der Antriebsleistung anhängen und reproduzierbar mit einem über die Zeit zunehmenden Energieeintrag in den Antriebsstrang einhergehen. Der Einfluss der dadurch erzeugten Erwärmung des Antriebsstrangs auf das Leerlaufdrehmoment kann daher für unterschiedliche Umgebungstemperaturen mit ausreichender Genauigkeit rechnerisch berücksichtigt werden.

Vorzugsweise wird zur Ermittlung der Umgebungstemperatur wenigstens ein Temperaturwert im Außenbereich des Schleuderstreuers und/oder eines angekoppelten Schleppers gemessen. Derartige Temperaturmessungen lassen sich mit herkömmlichen Sensoren auf vergleichsweise einfache Weise am Schleuderstreuer und/oder am angekoppelten Schlepper durchführen. Die Außentemperatur wird gegebenenfalls auch zu anderen Zwecken am Schlepper gemessen und kann dann von dessen Bordcomputer übernommen werden.

Vorzugsweise wird zur Ermittlung der Umgebungstemperatur wenigstens ein Temperaturwert eines aktuellen Aufenthaltsorts des Schleuderstreuers von einem Wetterdienst empfangen. Beispielsweise können Temperaturwerte über ein Mobilfunknetz aus dem Internet eingelesen werden. Der Aufenthaltsort des Schleuderstreuers kann beispielsweise eine bestimmte Region oder eine bestimmte Ortschaft sein.

Vorzugsweise liegen Messung und/oder Empfang des Temperaturwerts beim Vergleich von Gesamtdrehmoment und Leerlaufdrehmoment höchstens zwei Stunden zurück, insbesondere höchstens eine Stunde. Der Temperaturwert kann dann mit ausreichender Genauigkeit als Startwert für ein bekanntes Warmlaufverhalten des Antriebs verwendet werden.

Vorzugsweise wird ferner eine Betriebsdauer des Antriebs ab Antriebsstart der Streuscheibe gemessen, insbesondere über einen Zeitraum von wenigstens 10 Minuten. Unter dem Antriebsstart ist ein Kaltstart des Antriebs zu verstehen, bei dem die Betriebstemperatur des Antriebs im Wesentlichen der Umgebungstemperatur entspricht.

Für die überwachte Betriebsdauer kann von einem bekannten und reproduzierbaren Warmlaufverhalten des Antriebs ausgegangen werden, das vorab beispielsweise für eine bestim m-te Drehzahl ermittelt wurde. Die nach einer bestimmten Betriebsdauer erreichte Betriebstemperatur kann daher für die Umgebungstemperatur anhand des bekannten Warmlaufverhaltens berechnet werden.

Der Zusammenhang zwischen der jeweiligen Betriebstemperatur und dem Leerlaufdrehmoment wird dann auf bekannte Weise anhand von Messungen des Leerlaufdrehmoments bei verschiedenen Betriebstemperaturen vorab hergestellt.

Vorzugsweise fließt die Umgebungstemperatur als Starttemperatur für ein vorab ermitteltes zeitliches Warmlaufverhalten des Antriebs ein. Ferner wird dann eine aktuelle Betriebstemperatur des Antriebs auf der Grundlage des Warmlaufverhaltens und der Betriebsdauer berechnet. Das Warmlaufverhalten lässt sich beispielsweise als Temperatur-Zeit-Kennlinie darstellen. Dies ermöglicht eine einfache Berechnung der Betriebstemperatur entlang der Kennlinie ausgehend von der jeweiligen Starttemperatur.

Vorzugsweise wird die aktuelle Betriebstemperatur in Abhängigkeit von der Starttemperatur und der Betriebsdauer ab Antriebsstart mittels eines Polynoms berechnet und/oder aus einer gespeicherten Wertetabelle ausgelesen.

Das zeitliche Warmlaufverhalten kann durch Koeffizienten von Polynomen wiedergegeben werden, so dass sich die Betriebstemperatur durch Einsetzen der Starttemperatur und Betriebsdauer als Variablen der Polynome vergleichsweise einfach berechnen lässt.

Wertetabellen eignen sich für eine besonders flexible Wiedergabe des zeitlichen Warmlaufverhaltens für unterschiedliche Temperaturbereiche, Drehzahlen, Antriebsleistungen, Antriebsstränge, Streuscheiben oder dergleichen Maschinenkomponenten/ -parameter.

Vorzugsweise wird von dem Polynom und/oder der Wertetabelle ein Bereich der Umgebungstemperatur von wenigstens -5°C bis 15°C abgedeckt. Auf dieser Grundlage lassen sich die Leerlaufdrehmomente für die am häufigsten vorkommenden Umgebungstemperaturen mit ausreichender Genauigkeit berechnen.

Vorzugsweise werden bei der Ermittlung des Leerlaufdrehmoments ferner eine ab Antriebsstart der Streuscheibe aufgewendete Antriebsenergie und/oder eine mittlere Antriebsleistung für die Streuscheibe berücksichtigt. Davon abhängige Verluste im Antrieb können sich substantiell auf das zeitliche Warmlaufverhalten auswirken, insbesondere auf die Geschwindigkeit eines anfänglichen Temperaturanstiegs im Antriebsstrang. Eine Berücksichtigung der Antriebsenergie und/oder Antriebsleistung begünstigt daher eine präzise Ermittlung des Leerlaufdrehmoments.

Vorzugsweise fließt in die Bestimmung des Leerlaufdrehmoments ferner eine Drehzahl der Streuscheibe ein, insbesondere eine mittlere Drehzahl ab Antriebsstart der Streuscheibe. Die Geschwindigkeit des anfänglichen Temperaturanstiegs kann von der Drehzahl der Streuscheibe substantiell abhängen. Folglich kann eine Berücksichtigung der Drehzahl bei der Ermittlung des zeitlichen Warmlaufverhaltens vorteilhaft sein.

Die gestellte Aufgabe wird gemäß Anspruch 11 ebenso mit einem Schleuderstreuer für Dü n-ger gelöst. Demnach umfasst dieser wenigstens eine insbesondere hydraulisch angetriebene Streuscheibe und eine Recheneinheit zum Berechnen einer Ausbringmenge des Düngers durch Vergleich eines beim Düngeraustrag im Antrieb der Streuscheibe erfassten Gesamtdrehmoments mit einem Leerlaufdrehmoment des Antriebs unter Berücksichtigung einer Temperaturabhängigkeit des Leerlaufdrehmoments. Erfindungsgemäß ist die Recheneinheit dazu ausgebildet, das Leerlaufdrehmoment unter Berücksichtigung einer für den Schleuderstreuer ermittelten Umgebungstemperatur zu berechnen. Damit lassen sich die bezüglich des Verfahrens beschriebenen Vorteile erzielen.

Drehmomente im Antrieb können mit bekannten Einrichtungen gemessen werden. Hydraulische Antriebe eignen sich dafür besonders.

Vorzugsweise umfasst der Schleuderstreuer wenigstens einen Außentemperatursensor und/oder eine Datenschnittstelle zum Einlesen von im Bereich eines zugeordneten Schleppers gemessenen Außentemperaturen.

Vorzugsweise umfasst der Schleuderstreuer ferner eine Empfangseinheit zum Empfangen von Wetterdaten eines Wetterdienstes und/oder eine Datenschnittstelle zum Einlesen von an einem zugeordneten Schlepper empfangenen Wetterdaten.

Vorzugsweise ist die Recheneinheit ferner zum Messen einer Betriebsdauer ab Antriebsstart der Streuscheibe ausgebildet.

Vorzugsweise ist die Recheneinheit ferner zum Speichern und Verarbeiten eines zeitlichen Warmlaufverhaltens des Antriebs über einen Temperaturbereich von höchstens -5°C bis mindestens +15°C ausgebildet.

Vorzugsweise ist der Antrieb ein hydraulischer Antrieb für zwei Streuscheiben. Bei hydraulischen Antrieben spielt die Betriebstemperatur des Antriebsstrangs eine besondere Rolle, insbesondere aufgrund der Viskosität des Hydraulikfluids. Folglich lässt sich das Verfahren bei einem Schleuderstreuer mit hydraulischem Antrieb der Streuscheiben besonders vorteilhaft einsetzen.

Eine bevorzugte Ausführungsform der Erfindung ist in den Zeichnungen dargestellt. Es zeigen:
- Fig. 1: eine schematische Draufsicht auf einen Schleuderstreuer;
- Fig. 2: eine schematische Temperaturabhängigkeit des Leerlaufdrehmoments; und
- Fig. 3: eine Kennlinie zur Wiedergabe eines zeitlichen Warmlaufverhaltens im Antrieb der Streuscheibe.

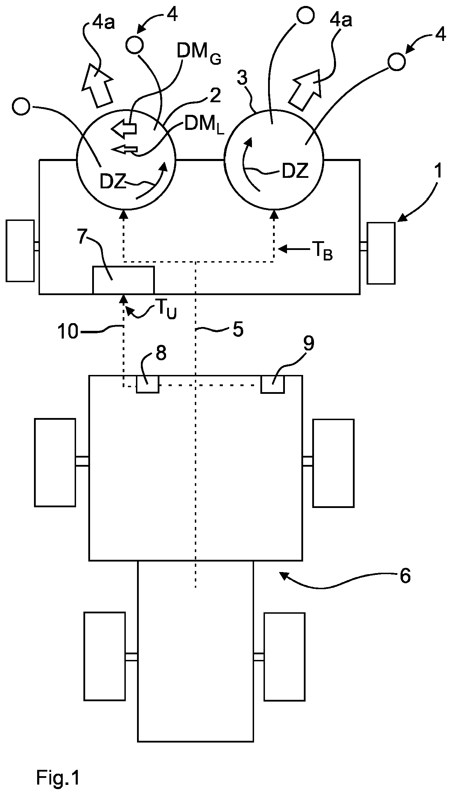

Wie die Fig. 1 in schematischer Draufsicht erkennen lässt, umfasst der Schleuderstreuer 1 zwei Streuscheiben 2, 3 zum Austrag von Dünger 4. Die Streuscheiben 2, 3 sind vorzugsweise mittels eines hydraulischen Antriebs 5 auf bekannte Weise von einem angekoppelten Schlepper 6 angetrieben.

Der Schleuderstreuer 1 umfasst eine Recheneinheit 7 zum fortlaufenden Berechnen einer Ausbringmenge 4a des Düngers 4 anhand eines von der Ausbringmenge 4a an den Streuscheiben 2, 3 verursachten Lastdrehmoments. Dieses entspricht im Wesentlichen der Differenz zwischen einem beim Düngeraustrag im Antrieb 5 der Streuscheiben 2, 3 erfassten Gesamtdrehmoment DM_{G} und einem Leerlaufdrehmoment DM_{L} zum Drehen der Streuscheiben 2, 3 ohne Dünger 4. Bei der Berechnung wird ferner berücksichtigt, dass das Leerlaufdrehmoment DM_{L} temperaturabhängig ist.

Hierbei kann vorgesehen sein, das Drehmoment jeder Streuscheibe 2,3 individuell zu messen oder das Gesamtdrehmoment für beide Streuscheiben zusammen. In einer kostengün s-tigen Alternative kann vorgesehen sein, das Drehmoment nur an einer der Streuscheiben 2,3 zu messen und die hierdurch ermittelte Ausbringmenge zur Regelung beider Streuscheiben zu verwenden unter der Annahme, dass sich die Dosiervorrichtungen beider Streuscheiben ähnlich verhalten.

Am Schleuderstreuer 1 und/oder am Schlepper 6 ist wenigstens ein Außentemperatursensor 8 zum Messen einer Umgebungstemperatur T_{U} für den Schleuderstreuer 1 vorhanden. Ergänzend oder alternativ dazu kann eine Empfangseinheit 9 zum Empfang von Wetterdaten einschließlich einer Umgebungstemperatur T_{U} für den Schleuderstreuer 1 an diesem und/oder am Schlepper 6 vorhanden sein. Am Schlepper 6 gemessene und/oder empfangene Umgebungstemperaturen T_{U} werden beispielsweise über eine Datenschnittstelle 10 an die Recheneinheit 7 übertragen.

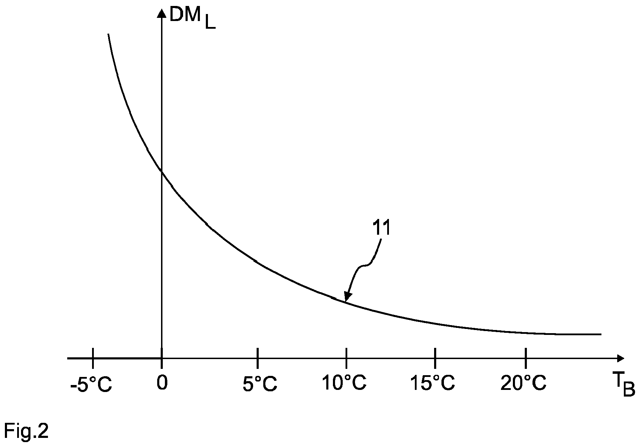

Die Fig. 2 verdeutlicht schematisch eine Temperaturabhängigkeit 11 des zu überwindenden Leerlaufdrehmoments DM_{L} bezogen auf eine Betriebstemperatur T_{B} im Antrieb 5. Das Leerlaufdrehmoment DM_{L} nimmt mit steigender Betriebstemperatur T_{B} ab, da die Reibungswiderstände im Antrieb 5, wie beispielsweise aufgrund der inneren Reibung in Hydraulikflüssigkeiten, mit steigender Betriebstemperatur T_{B} nachlassen. Dies gilt insbesondere für Betriebstemperaturen T_{B} bis 30° C und damit für das anfängliche Warmlaufen des Antriebs 5.

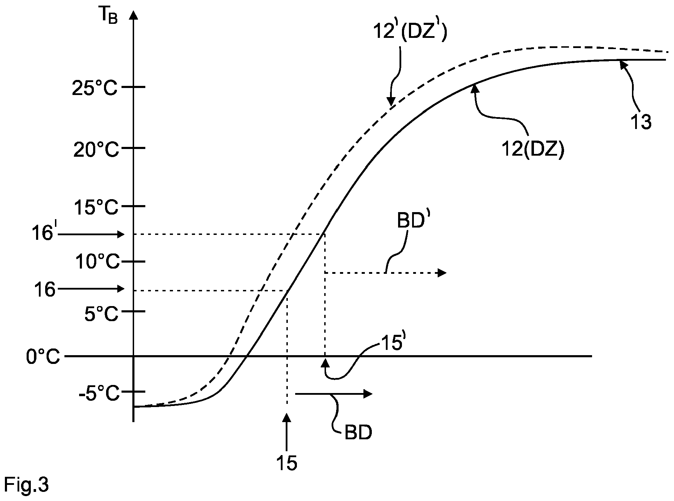

Die Fig. 3 verdeutlicht schematisch das zeitliche Warmlaufverhalten 12 des Antriebs 5. Demnach steigt die Betriebstemperatur T_{B} mit zunehmender Betriebsdauer BD des Antriebs 5 und der Streuscheiben 2, 3 kontinuierlich an und erreicht schließlich einen im Wesentlichen konstanten Wert 13 für den Dauerbetrieb der Streuscheiben 2, 3. Das Warmlaufverhalten 12 ist beispielsweise charakteristisch für eine bestimmte Drehzahl DZ und/oder eine bestimmte Antriebsleistung der Streuscheiben 2, 3.

Zur Veranschaulichung ist in der Fig. 3 ferner ein alternatives Warmlaufverhalten 12' dargestellt, wie es sich beispielsweise bei einer höheren Drehzahl DZ' und/oder einer höheren Antriebsleistung ergeben könnte. Aufgrund einer dann erhöhten Verlustleistung im Antrieb 5 könnte sich die Warmlaufphase bis zum Erreichen eines Werts 13' für den Dauerbetrieb beispielsweise verkürzen.

Der Erfindung liegt der Gedanke zugrunde, dass die Temperaturabhängigkeit 11 des Leerlaufdrehmoments DM_{L} und das zeitliche Warmlaufverhalten 12 des Antriebs 5 systemisch bedingt und ausgehend von einer bestimmten Starttemperatur des Antriebs 5 bei Antriebsstart 15 für bestimmte Betriebsparameter, wie beispielsweise der Drehzahl DZ, reproduzierbar sind. Ferner wird vereinfachend angenommen, dass für die Starttemperatur des Warmlaufverhaltens 12 jeweils die Umgebungstemperatur T_{U} bei Antriebsstart 15 eingesetzt werden kann. Es hat sich überraschenderweise herausgestellt, dass man die Temperaturabhän-gigkeit 11 des Leerlaufdrehmoments DM_{L} mit diesen Annahmen ausreichend genau bei der Ermittlung der Ausbringmenge 4a berücksichtigt.

Folglich kann das Leelaufdrehmoment DM_{L} nach Ermittlung wenigstens eines Temperaturwerts 16 der Umgebungstemperatur T_{U} für den Schleuderstreuer 1 auf der Grundlage des zeitlichen Warmlaufverhaltens 12 und der Temperaturabhängigkeit 11 berechnet werden.

Die Temperaurabhängigkeit 11 kann in Form wenigstens eines Polynoms und/oder in Form wenigstens einer Wertetabelle in die Berechnung des Leerlaufdrehmoments DM_{L} und schließlich in die Ermittlung der Ausbringmenge 4a des Düngers 4 einfließen.

Auch das Warmlaufverhalten 12 kann in Form wenigstens eines Polynoms und/oder in Form wenigstens einer Wertetabelle in die Berechnung der Betriebstemperatur T_{B} und schließlich in die Ermittlung der Ausbringmenge 4a des Düngers 4 einfließen.

Polynome und Wertetabellen können dann für unterschiedliche Konfigurationen des Schleuderstreuers 1 und/oder Betriebsparameter des Antriebs 5 in der Recheneinheit 7 vorgehalten werden, beispielsweise für unterschiedliche Streuscheiben 2, 3 und zugehörige Drehzahlen DZ, für unterschiedliche Antriebsleistungen und/oder seit Antriebsstart 15 der Streuscheiben 2, 3 übertragene Antriebsenergien.

Ausgehend vom Temperaturwert 16 für die jeweilige Umgebungstemperatur T_{U} können dann die nach einer bestimmten Betriebsdauer BD ab Antriebsstart 15 erreichte Betriebstemperatur T_{B} und das zugehörige Leerlaufdrehmoment DM_{L} aus den passenden Wertetabellen ausgelesen und/oder mittels Polynomen berechnet werden.

Der Temperaturwert 16 wird vorzugsweise mit dem Außentemperatursensor 8 gemessen und/oder von der Empfangseinheit 9 von einem Wetterdienst beispielsweise über ein Mobilfunknetz empfangen. Vorzugsweise liegen Messung und/oder Empfang des Temperaturwerts 16 dann nicht mehr als zwei Stunden, insbesondere nicht mehr als eine Stunde, vor der Berechnung des Leerlaufdrehmoments DM_{L} und insbesondere vor der Ermittlung der Ausbringmenge 4a.

Wie in der Fig. 1 beispielhaft dargestellt ist, kann sich der Außentemperatursensor 8 am Schlepper 6 befinden. Ebenso wäre es möglich, den Außentemperatursensor 8 am Schleuderstreuer 1 anzubringen. Gleiches gilt prinzipiell für die im Bereich des Schleppers 6 dargestellte Empfangseinheit 9. Gegebenenfalls ist ein Außentemperatursensor 8 und/oder eine Empfangseinheit 9 für den Empfang von Wetterdaten oder dergleichen über ein Mobilfunknetz für andere Zwecke bereits am Schlepper 6 vorhanden. Für die Ermittlung des Temperaturwerts 16 ist dann keine zusätzliche Hardware nötig.

Das vom Antrieb 5 an die Streuscheiben 2, 3 übertragene Gesamtdrehmoment DM_{G} lässt sich auf bekannte Weise fortlaufend während des Düngeraustrags messen. Dies gilt ebenso für eine Vorabbestimmung der Temperaurabhängigkeit 11, also des Leerlaufdrehmoments DM_{L} bei verschiedenen Betriebstemperaturen T_{B}. Das von der Ausbringmenge 4a jeweils verursachte Lastdrehmoment ergibt sich aus der Differenz des gemessenen Gesamtdrehmoments DM_{G} und des berechneten Leerlaufdrehmoments DM_{L} der Streuscheiben 2, 3.

Temperaurabhängigkeit 11 und zeitliches Warmlaufverhalten 12 werden vorab bestimmt und sind in der Recheneinheit 7 gespeichert. Temperaurabhängigkeit 11 und/oder zeitliches Warmlaufverhalten 12 werden vorzugsweise passend zu bestimmten Betriebsparametern der Streuscheiben 2, 3 ausgewählt, insbesondere automatisch durch die Recheneinheit 7.

Beim beschriebenen Verfahren wird zuerst der Temperaturwert 16 für die Umgebungstemperatur T_{U} des Schleuderstreuers 1 ermittelt.

Auf dieser Grundlage wird die aktuelle Betriebstemperatur T_{B} des Antriebs 5 ausgehend vom Temperaturwert 16 anhand des zeitlichen Warmlaufverhaltens 12 des Antriebs 5 fortlaufend berechnet. Dabei geht man vom Temperaturwert 16 als der Betriebstemperatur T_{B} bei Antriebsstart 15 aus.

Wie die Fig. 3 anhand der beispielhaft dargestellten Kennlinie für das Warmlaufverhalten 12 erkennen lässt, wird dem Temperaturwert 16 der Antriebsstart 15 zugeordnet und somit der Beginn der Betriebsdauer BD des Antriebs 5. Entsprechend dem daran anschließenden Warmlaufverhalten 12 kann nachfolgenden Zeitpunkten, also einzelnen Werten der Betriebsdauer BD, eine bestimmte Betriebstemperatur T_{B} zugeordnet werden, beispielsweise entlang der in der Fig. 3 dargestellten Kennlinie für das Warmlaufverhalten 12.

Die fortlaufende Berechnung der Betriebstemperatur T_{B} kann insbesondere nach deren Stabilisierung im Dauerbetrieb, wie beispielsweise nach Erreichen des im Wesentlichen konstanten Werts 13, abgebrochen werden. Dies gilt prinzipiell analog für die Berechnung des Leerlaufdrehmoments DM_{L}. Nach dem Warmlaufen des Antriebs 5 kann von einem konstanten Leerlaufdrehmoment DM_{L} ausgegangen werden.

Ein bestimmtes Warmlaufverhalten 12 kann für unterschiedliche Umgebungstemperaturen T_{U} des Schleuderstreuers 1 verwendet werden. Dies ist beispielhaft für einen alternativen Temperaturwert 16' angedeutet, dem ein Antriebsstart 15' zuzuordnen wäre, an dem die für die Berechnung dann zu verwendende Betriebsdauer BD' beginnen würde. Die Zuordnung der jeweiligen Betriebstemperatur T_{B} würde wiederum entlang der Kennlinie für das Warmlaufverhalten 12 erfolgen.

Dieses in der Fig. 3 beispielhaft dargestellte Prinzip lässt sich in der Praxis durch Polynome und/oder gespeicherte Wertetabellen umsetzen. In Polynome für das Warmlaufverhalten 12 können der Temperaturwert 16 und/oder die Betriebsdauer BD ab Antriebsstart 15 dann als Variablen eingesetzt werden. Die Polynome umfassen vorzugsweise Koeffizienten, die das Warmlaufverhalten 12 für bestimmte Drehzahlen DZ, Antriebsleistungen und/oder dergleichen spezifisch wiedergeben.

Jeder derart berechneten Betriebstemperatur T_{B} kann in der Folge anhand der vorab bestimmten Temperaurabhängigkeit 11 ein Leerlaufdrehmoment DM_{L} zugeordnet werden. Auch dies kann, wie zuvor beschrieben, durch Polynome und/oder Wertetabellen in der Recheneinheit 7 gegebenenfalls unter Berücksichtigung bestimmter Betriebsbedingungen erfolgen, beispielsweise drehzahlspezifisch und/oder leistungsspezifisch.

Aus dem gemessenen Gesamtdrehmoment DM_{G} wird schließlich durch Subtraktion des derart berechneten Leerlaufdrehmoments DM_{L} ein Lastdrehmoment berechnet, dem sich eine bestimmte Ausbringmenge 4a des Düngers 4 zuordnen lässt. Die Ausbringmenge 4a lässt sich auf diese Weise fortlaufend während der Feldarbeit ermitteln.

Da die für das Leerlaufdrehmoments DM_{L} verantwortlichen Verluste im Antrieb 5 der Streuscheiben 2, 3 überwiegend systemisch bedingt sind und daher reproduzierbar für bestimmte Starttemperaturen auftreten, können die grundlegenden Zusammenhänge zwischen der herrschenden Umgebungstemperatur T_{U}, der Betriebsdauer BD und dem zugehörigen Leerlaufdrehmoment DM_{L}, also die Temperaurabhängigkeit 11 und das Warmlaufverhalten 12, vorab bestimmt werden.

Die Temperaurabhängigkeit 11 und das Warmlaufverhalten 12 können herstellerseitig für unterschiedliche Antriebe 5 unter standardisierten Bedingungen ermittelt werden. Temperaurabhängigkeit 11 und Warmlaufverhalten 12 können von der Recheneinheit 7 dann automatisch und passend zu den vom Anwender eingestellten Betriebsparametern, dem verbauten Antrieb 5 und/oder den eingesetzten Streuscheiben 2, 3 ausgewählt und für die Berechnung der Ausbringmenge 4a verwendet werden.

Das beschriebene Verfahren erübrigt Temperaturmessungen im Antrieb 5 bei Leerlaufbetrieb, so dass der dafür nötige apparative und zeitliche Aufwand entfällt.

## Patentansprüche

1. Verfahren zur Ausbringmengenerfassung eines Schleuderstreuers (1), wobei ein Gesamtdrehmoment (DM_{G}) beim Düngeraustrag im Antrieb (5) wenigstens einer Streuscheibe (2, 3) gemessen und mit einem Leerlaufdrehmoment (DM_{L}) des Antriebs (5) unter Berücksichtigung einer Temperaturabhängigkeit (11) des Leerlaufdrehmoments (DM_{L}) verglichen wird, **dadurch gekennzeichnet, dass** für den Schleuderstreuer (1) eine Umgebungstemperatur (T_{U}) ermittelt wird und als Eingangsparameter in eine Berechnung des Leerlaufdrehmoments (DM_{L}) einfließt.

2. Verfahren nach Anspruch 1, wobei zur Ermittlung der Umgebungstemperatur (T_{U}) wenigstens ein Temperaturwert (16) im Außenbereich des Schleuderstreuers (1) und/oder eines angekoppelten Schleppers (6) gemessen wird.

3. Verfahren nach Anspruch 1 oder 2, wobei zur Ermittlung der Umgebungstemperatur (T_{U}) wenigstens ein Temperaturwert (16) eines aktuellen Aufenthaltsorts des Schleuderstreuers (1) von einem Wetterdienst empfangen wird.

4. Verfahren nach Anspruch 2 und/oder 3, wobei Messung und/oder Empfang des Temperaturwerts (16) beim Vergleich von Gesamtdrehmoment (DM_{G}) und Leerlaufdrehmoment (DM_{L}) höchstens zwei Stunden zurückliegen, insbesondere höchstens eine Stunde.

5. Verfahren nach einem der vorigen Ansprüche, wobei ferner eine Betriebsdauer (BD) des Antriebs (5) ab Antriebsstart (15) der Streuscheibe (2, 3) gemessen wird, insbesondere über einen Zeitraum von wenigstens 10 Minuten.

6. Verfahren nach Anspruch 5, wobei die Umgebungstemperatur (T_{U}) als Starttemperatur eines vorab ermittelten zeitlichen Warmlaufverhaltens (12) des Antriebs (5) einfließt und eine aktuelle Betriebstemperatur (T_{B}) des Antriebs (5) auf der Grundlage des zeitlichen Warmlaufverhaltens (12) und der Betriebsdauer (BD) ermittelt wird.

7. Verfahren nach Anspruch 6, wobei die aktuelle Betriebstemperatur (T_{B}) in Abhängigkeit von der Starttemperatur und der Betriebsdauer (BD) ab Antriebsstart (15) mittels eines Polynoms berechnet und/oder aus einer gespeicherten Wertetabelle ausgelesen wird.

8. Verfahren nach Anspruch 7, wobei das Polynom und/oder die Wertetabelle einen Bereich der Umgebungstemperatur (T_{U}) von wenigstens -5°C bis 15°C abdecken.

9. Verfahren nach wenigstens einem der vorigen Ansprüche, wobei in die Ermittlung des Leerlaufdrehmoments (DM_{L}) ferner eine ab Antriebsstart (15) für die Streuscheibe (2, 3) aufgewendete Antriebsenergie und/oder eine mittlere Antriebsleistung für die Streuscheibe (2, 3) einfließt.

10. Verfahren nach wenigstens einem der vorigen Ansprüche, wobei in die Ermittlung des Leerlaufdrehmoments (DM_{L}) ferner eine Drehzahl (DZ) der Streuscheibe (2, 3), insbesondere eine mittlere Drehzahl ab Antriebsstart (15), einfließt.

11. Schleuderstreuer (1) für Dünger (4), mit wenigstens einer insbesondere hydraulisch angetriebenen Streuscheibe (2, 3), und mit einer Recheneinheit (7) zum Berechnen einer Ausbringmenge (4a) des Düngers (4) durch Vergleich eines beim Düngeraustrag im Antrieb (5) der Streuscheibe (2, 3) erfassten Gesamtdrehmoments (DM_{G}) mit einem Leerlaufdrehmoment (DM_{L}) des Antriebs (5) unter Berücksichtigung einer Temperaturabhängigkeit (11) des Leerlaufdrehmoments (DM_{L}), **dadurch gekennzeichnet, dass** die Recheneinheit (7) dazu ausgebildet ist, das Leerlaufdrehmoment (DM_{L}) unter Berücksichtigung einer für den Schleuderstreuer (1) ermittelten Umgebungstemperatur (T_{U}) zu berechnen.

12. Schleuderstreuer nach Anspruch 11, ferner mit wenigsten einem Außentemperatursensor (8) und/oder mit einer Datenschnittstelle (10) zum Einlesen einer im Bereich eines zugeordneten Schleppers (6) gemessenen Außentemperatur.

13. Schleuderstreuer nach Anspruch 11 oder 12, ferner mit einer Empfangseinheit (9) zum Empfangen von Wetterdaten eines Wetterdienstes und/oder mit einer Datenschnittstelle (10) zum Einlesen von an einem zugeordneten Schlepper (6) empfangener Wetterdaten.

14. Schleuderstreuer nach einem der Ansprüche 11 bis 13, wobei die Recheneinheit (7) ferner zum Messen einer Betriebsdauer (BD) ab Antriebsstart (15) der Streuscheibe (2, 3) ausgebildet ist.

15. Schleuderstreuer nach einem der Ansprüche 11 bis 14, wobei die Recheneinheit (7) ferner zum Speichern und Verarbeiten eines zeitlichen Warmlaufverhaltens (12) des Antriebs (5) über einen Temperaturbereich von höchstens -5°C bis mindestens +15°C ausgebildet ist.
